# EUROPEAN PATENT APPLICATION

(11) **EP 2 363 430 A1**
(43) Date of publication of application: **07.09.2011**
(21) Application number: 11155696.5
(22) Date of filing: 23.02.2011
(51) Int. Cl.: C08K 5/00, C08K 5/06, C08K 5/59, C08G 59/68, C08G 77/38, C09D 183/06, C08L 83/06

(54) **Radiation curable silicone composition**

(30) Priority: 05.03.2010 JP 2010048972
(71) Applicant: Shin-Etsu Chemical Co., Ltd., Chiyoda-ku, Tokyo (JP)
(72) Inventor: Tanaka, Kenji, Gunma-ken (JP); Irifune, Shinji, Gunma-ken (JP)
(74) Representative: Stoner, Gerard Patrick

(57) **Abstract**

A radiation curable silicone composition which can be cured at a high speed even when the composition contains a photosensitizer is provided. The composition mainly comprises (A) 100 parts by weight of a cationic polymerizable organopolysiloxane having epoxy group represented by the following average compositional formula (1):

R¹ₘR²ₙSiO_{(4-m-n)/2} (1)

wherein R¹ represents a substituted or unsubstituted monovalent C₁ to C₁₀ hydrocarbon group, R² represents a monovalent organic group having epoxy group, m > 0, n > 0, and 0 < m+n ≤ 3;
(B) 0.05 to 20 parts by weight of a photoacid generator which exhibits a catalytic action in radiation curing of the cationic polymerizable organopolysiloxane (A); and
(C) 0.001 to 10 parts by weight of an anthracene compound having a photosensitizing effect represented by the following general formula (2): 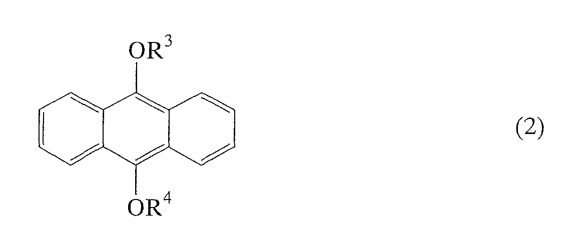 wherein R³ and R⁴ independently represent a substituted or unsubstituted monovalent C₁ to C₂₀ hydrocarbon group.

## Description

### TECHNICAL FIELD

This invention relates to a radiation curable silicone composition.

### BACKGROUND

Various methods have been used for the curing of silicone compositions. Exemplary known methods include condensation by using an organometallic compound, vulcanization by using an organic peroxide, and hydrosilylation by using a platinum group metal catalyst. These methods, however, suffer from poor energy efficiency due to their need of heating, and a method with improved energy efficiency is required for improving productivity and to meet the recent energy saving trend due to the global warming. Accordingly, curing methods using radiation for the curing not involving heating have become a focus of attention. Among such methods, the curing method using cationic polymerization wherein a compound generating an acid by the irradiation with radiation beam (photoacid generator) is used to accomplish ring opening of the epoxy group has found wide applications since the curing is less likely to be inhibited by oxygen compared to the conventional radical polymerization using acryl group, and also, since this method is a convenient method with high operativity (Patent Documents 1 and 2: Japanese Patent Nos. 3384268 and 3993533).

Various photoacid generators have been proposed for use in this cationic polymerization. A typical compound used for the photoacid generators is zwitter ion having electric charge in the molecule (JP-B 02-038602 and Japanese Patent No. 2557782). The photoacid generator is known to absorb radiation to undergo transition to the excited state, and then, the decomposition reaction proceeds to generate an acid in the course of the decomposition. The maximum peak in the light absorption of the photoacid generator is in the range of 200 to 300 nm, while the light intensity is in its highest in the range of 300 to 400 nm in the case of the light source such as high pressure mercury lamp or metal halide light source commonly used in curing the radiation curable silicone composition, and therefore, the photoacid generator is not efficiently activated by using such light source. Accordingly, in a method known in the art, a photosensitizer is added for the purpose of using the light beam having a wavelength of 300 to 400 nm for the activation of the photoacid generator. Similarly, curing of the radiation curable silicone composition is promoted by adding a photosensitizer (JP-A 2009-013317), while the high speed curing having practical improvement over the conventional radiation curable silicone composition not containing the photosensitizer is not yet realized.

The present invention has been completed in view of the situation as described above, and an object of the present invention is to provide a radiation curable silicone composition which can be cured at a high speed even when the radiation curable silicone composition contains a photosensitizer.

In order to realize the object as described above, the inventors of the present invention have made an intensive study and found that when a photoacid generator is used as a curing catalyst (activator) and an anthracene compound with organoxy group represented by formula (2), and in particular, an anthracene compound in which the substituent is an alkoxy group containing 1 to 10 carbon atoms is used as a photosensitizer in the radiation curable cationic polymerizable silicone composition, curing at a higher speed is realized due to the superior photosensitizing effect, as compared with the case using a conventional photosensitizer.

The inventors also found that the radiation curable silicone composition as described above is readily curable even at a low radiation dose to form a silicone cured article which is practically acceptable in commercial point of view. The present invention has been completed on the bases of such findings.

Accordingly, the present invention provides the following radiation curable silicone composition.
[1] A radiation curable silicone composition comprising
   (A) 100 parts by weight of a cationic polymerizable organopolysiloxane having an epoxy group represented by the following average compositional formula (1):

      R¹ₘR²ₙSiO_{(4-m-n)/2} (1)

      wherein R¹ represents a substituted or unsubstituted monovalent hydrocarbon group having 1 to 10 carbon atoms, R² represents a monovalent organic group having an epoxy group, and m > 0 and n > 0 with the proviso that 0 < m+n ≤ 3;
   (B) 0.05 to 20 parts by weight of a photoacid generator which exhibits a catalytic action in radiation curing of the cationic polymerizable organopolysiloxane (A);
      and
   (C) 0.001 to 10 parts by weight of an anthracene compound having a photosensitizing effect represented by the following general formula (2): 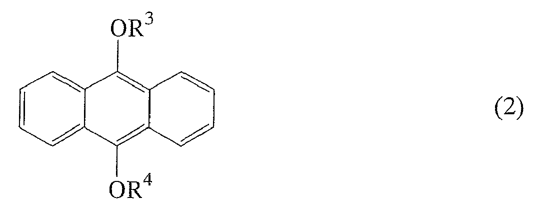 wherein R³ is a substituted or unsubstituted monovalent hydrocarbon group having 1 to 20 carbon atoms, and R⁴ is a substituted or unsubstituted monovalent hydrocarbon group having 1 to 20 carbon atoms, with the proviso that R³ and R⁴ may be the same or different.
[2] A radiation curable silicone composition according to [1] wherein R³ and R⁴ in the component (C) are independently a substituted or unsubstituted alkyl group having 1 to 10 carbon atoms.
[3] A radiation curable silicone composition according to [1] or [2] wherein 1 to 35% by mole of the entire organic group in the component (A) is a monovalent epoxy functional organic group.
[4] A radiation curable silicone composition according to any one of [1] to [3] wherein the component (B) is diaryl iodonium salt or triaryl sulfonium salt.
[5] A radiation curable silicone composition according to any one of [1] to [4] wherein the radiation curable silicone composition is cured by a radiation source having a wavelength in the range of 300 to 400 nm.
[6] A radiation curable silicone composition according to any one of [1] to [5] wherein the radiation curable silicone composition is the one for a release paper.

### ADVANTAGEOUS EFFECTS

We find that radiation-curable silicone compositions as disclosed herein, comprising an anthracene compound substituted with an organoxy group for the photosensitizer, are readily curable even at a low radiation dose to form silicone cured articles or materials which are practically acceptable from a commercial point of view. In addition, the radiation-curable silicone compositions disclosed herein are found to enable unprecedentedly high speed curing, since the anthracene compound used in the present invention is found to have a higher photosensitizing effect than a conventional photosensitizer.

### FURTHER EXPLANATIONS; OPTIONS AND PREFERENCES

The radiation curable silicone composition of the present invention comprises components (A), (B), and (C). Next, these components are described in detail.

Component (A) in the radiation curable silicone composition of the present invention is the cationic polymerizable organopolysiloxane having the following average compositional formula (1):

R¹ₘR²ₙSiO_{(4-m-n)/2} (1)

wherein R¹ is a substituted or unsubstituted monovalent hydrocarbon group having 1 to 10 carbon atoms, R² is a monovalent organic group having an epoxy group, and m > 0 and n > 0 with the proviso that 0 < m+n ≤ 3.

In the above formula, R¹ is a substituted or unsubstituted monovalent hydrocarbon group having 1 to 10 carbon atoms selected from alkyl groups such as methyl group, ethyl group, propyl group, and butyl group, cycloalkyl groups such as cyclohexyl group, aryl groups such as phenyl group and tolyl group, and any of these groups having a part or all of the hydrogen atoms bonded to the carbon atoms substituted with hydroxy group, cyano group, or halogen atom such as hydroxypropyl group, cyanoethyl group, 1-chloropropyl group, and 3,3,3-trifluoropropyl group. Preferably, at least 80% by mole of R¹ is an alkyl group, and in particular, methyl group.

R² is a monovalent organic group having epoxy group. Exemplary cationic polymerizable epoxy functional groups include those having the following structures:

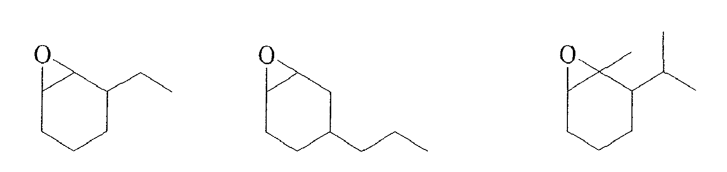

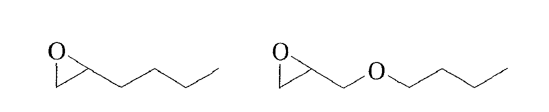

In view of the curability, the preferred is a cationic polymerizable organopolysiloxane wherein 1 to 35% by mole of the entire organic groups (namely sum of R¹ and R²) is the monovalent epoxy functional organic group (namely, R²), and the more preferred is a cationic polymerizable organopolysiloxane wherein 1 to 25% by mole of the entire organic groups is the monovalent epoxy functional organic group. When the content of the epoxy functional organic group is less than 1% by mole, the curing speed will be insufficient and this may result in the curing failure. When the content is in excess of 35% by mole, the content of the epoxy group will be high, and marked high speed curability may not be realized.

The organopolysiloxane may preferably have a viscosity at 25°C of up to 1,000,000 mPa·s, and more preferably up to 100,000 mPa·s. When the viscosity is in excess of 1,000,000 mPa·s, the composition may have an unduly high viscosity, and this may result in the handling inconvenience. The viscosity is the value obtained by measuring a rotary viscometer.

The content of the cationic polymerizable organopolysiloxane (A) is 100 parts by weight, and the other components may be incorporated by adjusting their content based on the content of the cationic polymerizable organopolysiloxane (A).

Component (B) in the radiation curable silicone composition of the present invention is a photoacid generator which exhibits a catalytic action in radiation curing of the cationic polymerizable organopolysiloxane (A). Exemplary photoacid generators include diaryl iodonium salt, triaryl sulfonium salt, triaryl selenonium salt, tetraaryl phosphonium salt, and tetraaryl diazonium salt respectively represented by the following general formulae:
R⁵₂I⁺X⁻, R⁵₃S⁺X⁻ , R⁵₃Se⁺X⁻, R⁵_{4P}⁺X⁻ , and R⁵₄N⁺X⁻
wherein R⁵ represents an aryl group such as phenyl group, tolyl group, or 4-(ethyl)phenyl group; a heterocyclic group such as pyridyl group, N-methylpyridyl group, or indolyl group; an aryloxy group such as methoxyphenyl group or isopropoxyphenyl group; a heterocycleoxy group such as 4-methoxypyridyl group; with the proviso that two or more R⁵ may together form a ring structure; and X- represents an anion such as SbF₆⁻ , AsF₆⁻ , PF₆⁻ , BF₄⁻ , HSO₄⁻ , or C10₄⁻ . Among these, the preferred are hexafluoroantimonate salt of diaryl iodonium and triaryl sulfonium in view of the reactivity in the curing.

The component (B) is preferably incorporated at a content of 0.05 to 20 parts by weight, preferably at 0.1 to 20 parts by weight, and more preferably at 0.5 to 10 parts by weight in relation to 100 parts by weight of the component (A). Curing will be insufficient when the component (B) is used at an excessively low content while the effect of adding the component (B) will be saturated at an excessively high content.

Component (C) in the radiation curable silicone composition of the present invention is a photosensitizer which is an anthracene compound represented by the following general formula (2): 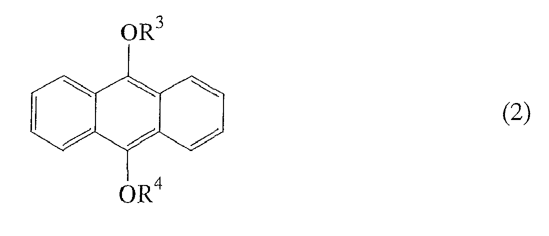 wherein R³ is a substituted or unsubstituted monovalent hydrocarbon group having 1 to 20 carbon atoms, and R⁴ is a substituted or unsubstituted monovalent hydrocarbon group having 1 to 20 carbon atoms, with the proviso that R³ and R⁴ may be the same or different.

In the above formula, R³ is a substituted or unsubstituted monovalent hydrocarbon group having 1 to 20 carbon atoms, and in particular, a substituted or unsubstituted monovalent hydrocarbon group having 1 to 10 carbon atoms selected from alkyl groups such as methyl group, ethyl group, propyl group, butyl group, 2-ethylhexyl group, and decyl group; aryl groups such as phenyl group, tolyl group, and naphthyl group; and any of these groups having a part or all of the hydrogen atoms bonded to the carbon atoms substituted with hydroxy group, cyano group, or halogen atom such as hydroxypropyl group, cyanoethyl group, 1-chloropropyl group, and 3,3,3-trifluoropropyl group. R⁴ is a substituted or unsubstituted monovalent hydrocarbon group having 1 to 20 carbon atoms, and in particular, a substituted or unsubstituted monovalent hydrocarbon group having 1 to 10 carbon atoms selected from alkyl groups such as methyl group, ethyl group, propyl group, butyl group, 2-ethylhexyl group, and decyl group; aryl groups such as phenyl group, tolyl group, and naphthyl group; and any of these groups having a part or all of the hydrogen atoms bonded to the carbon atoms substituted with hydroxy group, cyano group, or halogen atom such as hydroxypropyl group, cyanoethyl group, 1-chloropropyl group, and 3,3,3-trifluoropropyl group. R³ and R⁴ are preferably an alkyl group containing 1 to 20 carbon atoms, and more preferably, an alkyl group containing 1 to 10 carbon atoms in view of the photosensitizing property and solubility in the cationic polymerizable organopolysiloxane (A).

The component (C) is preferably incorporated at a content of 0.001 to 10 parts by weight, and preferably, at 0.005 to 5 parts by weight in relation to 100 parts by weight of the component (A). Curing will not be improved at a content of less than 0.001 parts by weight while the effect of improving the curability by the increase in the content will be saturated at a content in excess of 10 parts by weight.

The curable silicone composition of the present invention is produced by blending the components as described above at a given compositional ratio. The curable silicone composition of the present invention, however, may also contain an additive such as pigment, filler, antistatic agent, flame retardant, antifoaming agent, flowability adjusting agent, light stabilizer, solvent, non-reactive resin, and radical polymerizable compound as an optional component. The optional components may be added at an amount commonly used in the art not adversely affecting the advantageous effects of the present invention.

The curable silicone composition of the present invention can be cured by irradiating with a radiation energy beam. The radiation energy beam is not particularly limited as long as it induces decomposition of the photoacid generator which is the component (B). The radiation energy beam, however, is preferably a radiation energy beam of ultraviolet to visible range (about 100 to about 800 nm) obtained by using a high pressure or ultra high pressure mercury lamp, metal halide lamp, xenon lamp, carbon arc lamp, fluorescence lamp, semiconductor solid-state laser, argon laser, He-Cd laser, KrF excimer laser, ArF excimer laser, or F₂ laser. The preferred is the use of a radiation light source having strong light intensity preferably at 200 to 400 nm, and more preferably at 300 to 400 nm, for example, a high pressure mercury lamp or a metal halide lamp. Also usable is radiation having high energy such as electron beam and X-ray.

Irradiation with the radiation is generally sufficient if conducted at room temperature for about 0.1 second to 10 seconds. However, when the permeability of the energy beam is insufficient or the curable silicone composition film is thick, irradiation for a longer time may be preferable. If desired, after-cure may be conducted at room temperature to 150°C for several minutes to several hours after the energy beam irradiation.

Exemplary applications of the curable silicone composition of the present invention include coating composition, coating agent, ink, positive resist, resist film, liquid resist, photosensitive material, adhesive, release paper, molding material, casting material, putty, glass fiber impregnant, filler, sealant, sealing agent, and photopolymerization material. In the case of thin film coating at a silicone coating weight of up to 2 g/m², and in particular, at 0.05 to 2 g/m² as in the case of the release paper, faster curing on the substrate is enabled relative to conventional radiation curable silicone compositions.

### EXAMPLES

Next, the present invention is illustrated in detail by Examples and Comparative Examples.

In the following Examples and Comparable Examples, the physical properties in the Table are those measured by the test methods as described below. Ep in the structural formula represents the following epoxy functional group:

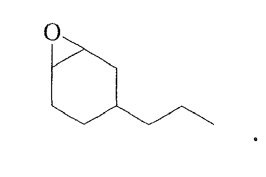

### Curability of the radiation curable silicone composition

The radiation curable silicone composition was coated on a polyethylene-laminated fine quality paper by roll coating to a coating weight of about 0.7 g/m², and the coating was irradiated with UV at a dose of 15 mJ/cm² by using 2 high pressure mercury lamps of 80 W/cm to thereby form a cured film. The resulting cured film was evaluated for its curability by touching with fingers. The result was evaluated "good" when the entire composition cured, "fair" when the entire composition was on the way of curing, and "poor" when the entire composition was uncured.

### Measurement of peeling strength

The radiation curable silicone composition was coated on a polyethylene-laminated fine quality paper by roll coating to a coating weight of about 0.7 g/m², and the coating was irradiated with UV at a dose of 15 mJ/cm² by using 2 high pressure mercury lamps of 80 W/cm to thereby form a cured film. Tesa-7475 tape (product name, a acrylic pressure sensitive adhesive tape manufactured by Tesa Tape) having a width of 2.5 cm was then adhered on the surface of the resulting cured film, and the tape was pressed by moving a roller of 2 kg forth and back. The resulting polyethylene-laminated fine quality paper laminate was cut at the width of the Tesa-7475 tape to produce sample strips having a width of 2.5 cm for the measurement of the peeling strength. This sample was aged at 70°C for 20 to 24 hours while being pressed at 20 g/cm², and a small portion at the edge of the Tesa-7475 tape was manually peeled from the cured film. The tape was peeled from the laminate from this peeled edge at an angle of 180° and at a peeling speed 0.3 m/minute by a tensile tester to measure strength (g/25 mm) required for the peeling of the Tesa-7475 tape from the cured film.

### Example 1

To 100 parts by weight of a cationic polymerizable organopolysiloxane (a) corresponding to the component (A) of the present invention represented by the following average compositional formula (a): 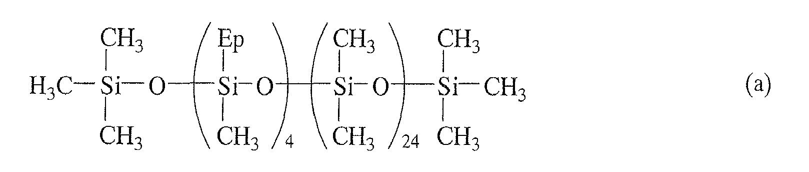 wherein 6.5% by mole of the entire organic group is the monovalent epoxy functional organic group, and having a viscosity at 25°C of 90 mPa·s, 1.0 part by weight of toluene solution having dissolved therein 50% by weight of a bis[4-alkyl(C₁₀ to C₁₃)phenyl]iodonium hexafluoroantimonate salt (e) which is a photoacid generator corresponding to the component (B) of the present invention and 7.6% by weight of 9,10-dibutoxyanthracene (f) corresponding to the component (C) of the present invention was added, and the mixture was homogeneously stirred to produce radiation curable silicone composition 1. This radiation curable silicone composition 1 was cured by the method as described above, and curability was confirmed by touching with fingers. The results are shown in Table 1. Peeling strength of the film produced by curing this radiation curable silicone composition 1 was also measured by the evaluation method as described above. The results are shown in Table 1.

### Example 2

To 100 parts by weight of a cationic polymerizable organopolysiloxane (d) corresponding to the component (A) of the present invention represented by the following average compositional formulae (b) and (c): 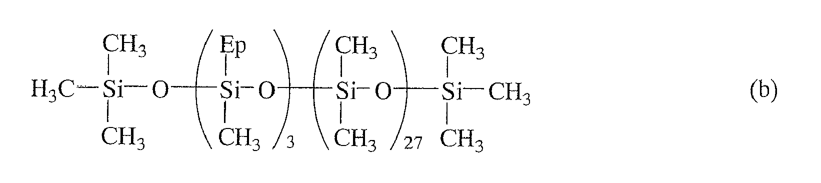 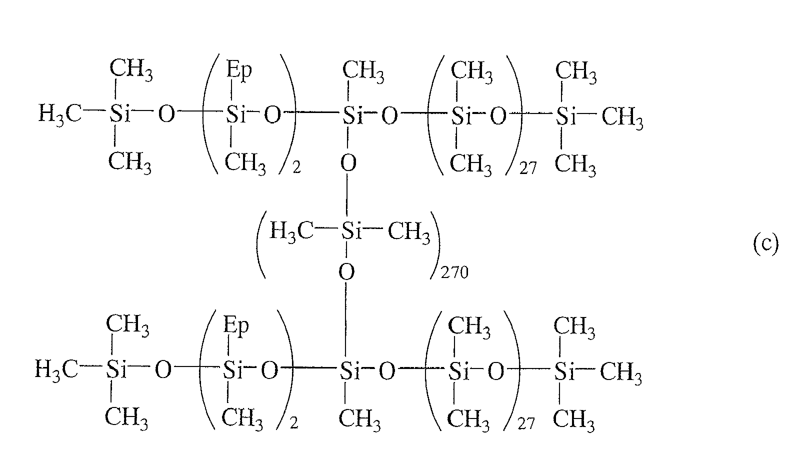 wherein 3.7% by mole of the entire organic group is the monovalent epoxy functional organic group, and having a viscosity at 25°C of 150 mPa·s, 1.0 part by weight of toluene solution having dissolved therein 50% by weight of a bis[4-alkyl(C₁₀ to C₁₃) phenyl] iodonium hexafluoroantimonate salt (e) which is a photoacid generator corresponding to the component (B) of the present invention and 7.6% by weight of 9,10-dibutoxyanthracene (f) corresponding to the component (C) of the present invention was added, and the mixture was homogeneously stirred to produce radiation curable silicone composition 2. This radiation curable silicone composition 2 was cured by the method as described above, and curability was confirmed by touching with fingers. The results are shown in Table 1. Peeling strength of the film produced by curing this radiation curable silicone composition 2 was also measured by the evaluation method as described above. The results are shown in Table 1.

### Example 3

To 100 parts by weight of an organopolysiloxane (a) of Example 1, 1.0 part by weight of toluene solution having dissolved therein 50% by weight of a bis[4-alkyl(C₁₀ to C₁₃)phenyl]iodonium hexafluoroantimonate salt (e) which is a photoacid generator corresponding to the component (B) of the present invention and 7.6% by weight of 9,10-bis(2-ethylhexoxy)anthracene (g) corresponding to the component (C) of the present invention was added, and the mixture was homogeneously stirred to produce radiation curable silicone composition 3. This radiation curable silicone composition 3 was cured by the method as described above, and curability was confirmed by touching with fingers. The results are shown in Table 1. Peeling strength of the film produced by curing this radiation curable silicone composition 3 was also measured by the evaluation method as described above. The results are shown in Table 1.

### Example 4

To 100 parts by weight of an organopolysiloxane (d) of Example 2, 1.0 part by weight of toluene solution having dissolved therein 50% by weight of a bis[4-alkyl(C₁₀ to C₁₃)phenyl]iodonium hexafluoroantimonate salt (e) which is a photoacid generator corresponding to the component (B) of the present invention and 7.6% by weight of 9,10-bis(2-ethylhexoxy)anthracene (g) corresponding to the component (C) of the present invention was added, and the mixture was homogeneously stirred to produce radiation curable silicone composition 4. This radiation curable silicone composition 4 was cured by the method as described above, and curability was confirmed by touching with fingers. The results are shown in Table 1. Peeling strength of the film produced by curing this radiation curable silicone composition 4 was also measured by the evaluation method as described above. The results are shown in Table 1.

### Comparative Example 1

To 100 parts by weight of an organopolysiloxane (a) of Example 1, 0.5 part by weight of bis[4-alkyl(C₁₀ to C₁₃)phenyl]iodonium hexafluoroantimonate salt (e) which is a photoacid generator was added, and the mixture was homogeneously stirred to produce radiation curable silicone composition 5. This radiation curable silicone composition 5 was cured by the method as described above, and curability was confirmed by touching with fingers. The results are shown in Table 1.

### Comparative Example 2

To 100 parts by weight of an organopolysiloxane (d) of Example 2, 0.5 part by weight of bis[4-alkyl(C₁₀ to C₁₃)phenyl]iodonium hexafluoroantimonate salt (e) which is a photoacid generator was added, and the mixture was homogeneously stirred to produce radiation curable silicone composition 6. This radiation curable silicone composition 6 was cured by the method as described above, and curability was confirmed by touching with fingers. The results are shown in Table 1.

### Comparative Example 3

To 100 parts by weight of an organopolysiloxane (a) of Example 1, 1.0 part by weight of toluene solution having dissolved therein 50% by weight of bis[4-alkyl(C₁₀ to C₁₃)phenyl]iodonium hexafluoroantimonate salt (e) which is a photoacid generator and 7.6% by weight of phenothiazine (h) was added, and the mixture was homogeneously stirred to produce radiation curable silicone composition 7. This radiation curable silicone composition 7 was cured by the method as described above, and curability was confirmed by touching with fingers. The results are shown in Table 1.

### Comparative Example 4

To 100 parts by weight of an organopolysiloxane (d) of Example 2, 1.0 part by weight of toluene solution having dissolved therein 50% by weight of bis[4-alkyl(C₁₀ to C₁₃)phenyl]iodonium hexafluoroantimonate salt (e) which is a photoacid generator and 7.6% by weight of phenothiazine (h) was added, and the mixture was homogeneously stirred to produce radiation curable silicone composition 8. This radiation curable silicone composition 8 was cured by the method as described above, and curability was confirmed by touching with fingers. The results are shown in Table 1.

### Comparative Example 5

To 100 parts by weight of an organopolysiloxane (a) of Example 1, 1.0 part by weight of toluene solution having dissolved therein 50% by weight of bis[4-alkyl(C₁₀ to C₁₃)phenyl]iodonium hexafluoroantimonate salt (e) which is a photoacid generator and 7.6% by weight of thioxanthen-9-one (i) was added, and the mixture was homogeneously stirred to produce radiation curable silicone composition 9. This radiation curable silicone composition 9 was cured by the method as described above, and curability was confirmed by touching with fingers. The results are shown in Table 1.

### Comparative Example 6

To 100 parts by weight of an organopolysiloxane (d) of Example 2, 1.0 part by weight of toluene solution having dissolved therein 50% by weight of bis[4-alkyl(C₁₀ to C₁₃)phenyl]iodonium hexafluoroantimonate salt (e) which is a photoacid generator and 7.6% by weight of thioxanthen-9-one (i) was added, and the mixture was homogeneously stirred to produce radiation curable silicone composition 10. This radiation curable silicone composition 10 was cured by the method as described above, and curability was confirmed by touching with fingers. The results are shown in Table 1.

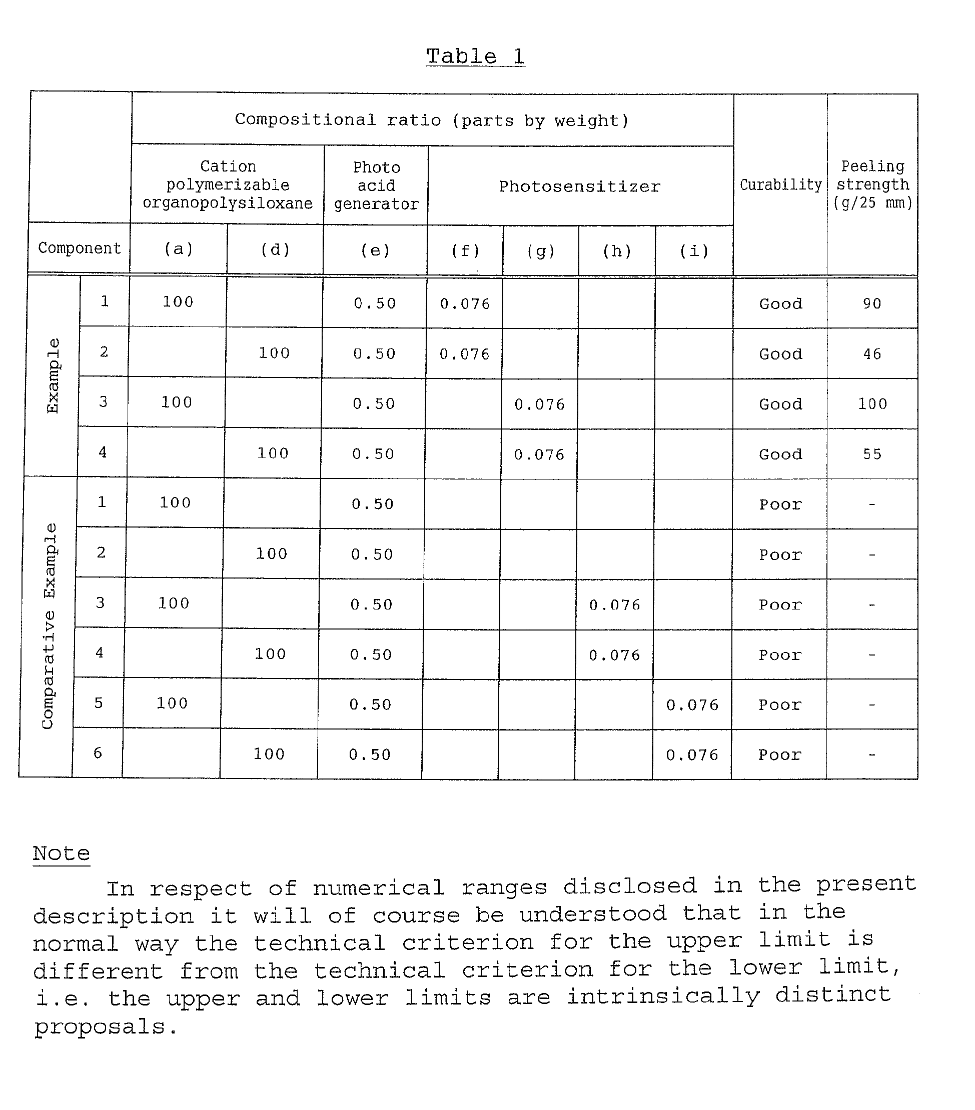

## Claims

1. A radiation curable silicone composition comprising
(A) 100 parts by weight of cationic polymerisable organopolysiloxane having an epoxy group, represented by the following average compositional formula (1):
R¹ₘR²ₙSiO(₄₋ₘ₋ₙ)_{/2} (1)
wherein R¹ represents substituted or unsubstituted monovalent hydrocarbon group having 1 to 10 carbon atoms, R² represents monovalent organic group having an epoxy group, m > 0 and n > 0, with the proviso that 0 < m+n ≤ 3;
(B) 0.05 to 20 parts by weight of photoacid generator, as catalyst for radiation curing of the cationic polymerisable organopolysiloxane (A), and
(C) 0.001 to 10 parts by weight of anthracene compound represented by the following general formula (2), as photosensitizer: 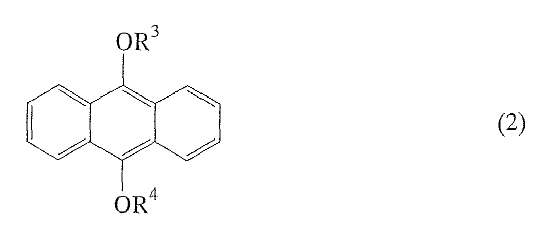 wherein R³ and R⁴ may be the same or different and represent substituted or unsubstituted monovalent hydrocarbon groups having 1 to 20 carbon atoms.

2. A radiation curable silicone composition according to claim 1 wherein R³ and R⁴ in component (C) are independently substituted or unsubstituted alkyl groups having 1 to 10 carbon atoms.

3. A radiation curable silicone composition according to claim 1 or 2 wherein 1 to 35% by mole of the entire organic groups in component (A) are monovalent epoxy-functional organic groups.

4. A radiation curable silicone composition according to any one of claims 1 to 3 wherein the component (B) is diaryl iodonium salt or triaryl sulfonium salt.

5. A radiation curable silicone composition according to any one of claims 1 to 4 wherein the radiation curable silicone composition is curable by radiation having a wavelength in the range 300 to 400 nm.

6. A radiation curable silicone composition according to any one of claims 1 to 5 wherein the radiation curable silicone composition is for a release paper.

7. A method comprising curing a silicone composition as defined in any one of claims 1 to 6, by irradiation thereof.

8. A method according to claim 7 in which the silicone composition is cured in film form.

9. A method according to claim 7 in which the silicone composition is cured on a paper to form a release paper.

10. A method according to any one of claims 7 to 9 in which the irradiation is from a radiation source having its strong light intensity in the range 200 to 400 nm.

11. A method according to claim 10 in which the radiation source is a mercury lamp or metal halide lamp.
